# EUROPEAN PATENT SPECIFICATION

(11) **EP 1 864 942 B1**
(45) Date of publication and mention of the grant of the patent: **27.01.2010**
(21) Application number: 07075422.1
(22) Date of filing: 01.06.2007
(51) Int. Cl.: B67C 7/00, B65G 15/44, B65G 17/40, B65G 47/84

(54) **Container transportation line for bottling plants**
Behältertransportband für Abfüllanlagen
Ligne de transport de récipients pour installations d'embouteillage

(30) Priority: 06.06.2006 IT PD20060226
(43) Date of publication of application: 12.12.2007
(73) Proprietor: MBF S.p.A., 37040 Veronella (Verona) (IT)
(72) Inventor: Mazzon, Giovanni, 37047 San Bonifacio (VR) (IT); Balzarin, Franco, 37040 Pressana (VR) (IT); Ciocchetta, Sergio, 33040 Pradamano (UD) (IT)
(74) Representative: Gallo, Luca

(56) References cited:
- EP-A1- 0 629 569
- EP-A1- 1 232 969
- EP-A2- 0 355 971
- DE-A1- 10 209 155
- US-A- 5 540 320
- US-A- 5 590 753
- US-A- 5 692 594

## Description

### Field of application

The present invention relates to a container transportation line for bottling plants. The line in question can advantageously be used for guiding the containers to the machines which form a bottling line, including, typically, a rinsing machine, a filling machine and a corking/capsuling machine or also, in the part situated furthest downstream along the line, a labeling machine and a packaging machine.

Therefore, the line in question is classifiable within the sector of the industry for bottling alimentary liquids such as wine, mineral water, hard liquors and beverages in general.

### Background art

A modern bottling line, in particular for bottling alimentary products, normally comprises three basic machines, which are:
- a rinsing machine, in which the containers are washed and sterilized;
- a filling machine, in which the liquid product is transferred from the storage tank into the container;
- a corking/capsuling machine, in which the container is sealed hermetically.

Downstream there may also be provided a labeling machine and a packaging machine as well as other ancillary machines.

The abovementioned machines are linked together within a single integrated process by means of bottle transfer and feeding systems. In more detail, the containers are loaded onto conveyor belts which convey them to the individual machines. From the conveyors the containers are then transferred onto a starwheel device, which is synchronized and integral with the machine, so that the position of each container corresponds exactly to the position of the operating component of the machine, which may be, depending on the machine considered, respectively: a filling nozzle, a washing nozzle, a corking device, a label applicator or the like.

On the outlet side of the machine the container is transferred by other starwheel or feed screw systems onto the following machine, and the container gradually passes through the rinsing machine, the bottling machine, the corking machine, until it reaches the labeling machine.

Obviously, it is necessary to maintain the synchronism and the correct timing along the whole line so that the relative position of the bottle and the operating component of the machine is always maintained. In order to achieve this, the starwheels and the other container transportation and guiding parts have a dimensions and a shape corresponding to the dimensions of the container, such that the container is seated precisely inside them.

Recently, as is well known, in particular in the sector of hard liquors, distilled alcohol, etc., but also beverages, there is a tendency to use bottles which have a varying format, being different in terms of shape (with a square, circular or oval base), dimensions or volume, sometimes with the use of intricate geometrical forms. In this way, the need from a marketing point of view to provide products which attract the consumer's interest and attention is satisfied.

Depending on these marketing requirements, the production within the bottling companies is performed in fairly small batches with frequent production changeovers. Therefore a need which exists in the bottling industry sector may be regarded as that of being able to have highly flexible plants. This need has been addressed both by the leading bottling establishments, which produce a large variety of products and formats, and by smaller size bottling firms, cellars and distilleries, which typically work with small batches and which need to have flexible and highly productive plants.

In connection with the above, however, each production change-over requires setting-up of the line, which is a fairly complex operation. It is in fact necessary to adjust manually all the container guiding and transporting devices and also replace the conveying starwheels of the rinsing unit, bottling unit, etc. In other words, this involves the operator carrying out personally adjustment of mechanical components, cams, mechanical adjusters, etc., with a considerable risk of injury. As is known, in accordance with the present state of the art, it is in fact possible to vary electronically only the operating parameters of each individual unit, such as, for example, the delivery time of the nozzle, or the speed of rotation of the machine.

The adjustment operations are usually complex and necessarily require direct action on the part of the operator and in particular result in a prolonged stoppage of the line which overall may amount to as much as 50% of the total time.

Some manufacturers have recently proposed on the market a (partial and unsatisfactory) solution to these problems which, however, involves radically changing the layout of the entire line and the individual working units. The known solution proposed envisages forming an annular line where the bottles move resting on special cup-like supports. The rinsing machine, bottling machine etc., are arranged along the line and have a linear extension instead of the conventional circular carousel configuration. The limitations of these plants are, firstly, the considerable length of the bottling line, which is far greater than that of conventional lines (where, instead, it is attempted to keep the plant as compact as possible and isolate it from the external environment), but in particular the fact that transportation in the cup-like seat involves modifying also each rinsing, bottling or other machine, both from a constructional and from a functional point of view, with obvious problems of cost and loss of efficiency and reliability compared to the conventional lines where the technology is now already consolidated.

It is know from EP 1 232 969 a device for equally spacing containers fed by a conveyor along a given path towards a star conveyor. The device comprises an articulated chain defined by links having a number of hinge pins between the links, and a number of retaining members for engaging and equally spacing individual containers along the path. Two cams are engaged alternating respectively by first pins and second pins. An adjusting device being provided to adjust the relative position of the two cams so that to adjust the distance between the retaining members to space containers of different sizes.

It is know from EP 0 629 569 a star conveyor having an adjustment device to easily and rapidly be adapted to differently-shaped containers. The device is constituted by two discs, one superposed on another, that are provided with compartments for receiving containers. A lever mechanism cinematically connects the discs and prevents and/or permits the discs to rotate reciprocally, increasing or reducing the compartment diameter.

It is know from DE 102 09 155 a conveyor belt for the transporting of foodstuffs having supports which are variable in their relative spacing and detachably connected to the conveyor belt. The posts on their side facing the conveyor belt have at least one protrusion fitting in a hole in the conveyor to facilitate positioning of the posts on the conveyor belt.

### Disclosure of the invention

The main object of the present invention is therefore to overcome the drawbacks associated with the solutions of the known type by providing a container transportation line, as defined by claim 1, for bottling plants which is able to bottle containers of different form and size, without the need to perform long and complex setting operations.

A further object of the present invention is to provide a transportation line which is able to be used in order to feed machines based on conventional technology such as rinsing machines, filling machines, corking machines, etc., without having to adapt their operating principle.

A further object of the present invention is to provide a transportation line which is operationally entirely reliable and which allows a high performance to be achieved for the entire bottling line.

Another object of the present invention is to provide a transportation line with compact dimensions.

Another object of the present invention is to provide a versatile transportation line so as to form bottling lines with different characteristics in terms of productivity, operating range, layout, etc.

Another object of the present invention is to provide a transportation line with a high degree of safety for the personnel working on the bottling line.

### Brief description of the drawings

The technical features of the invention, in accordance with the abovementioned objects, may be clearly determined from the contents of the claims provided below and the advantages thereof will emerge more clearly from the detailed description which follows, provided with reference to the accompanying drawings which illustrate a purely exemplary and non-limiting embodiment thereof in which:

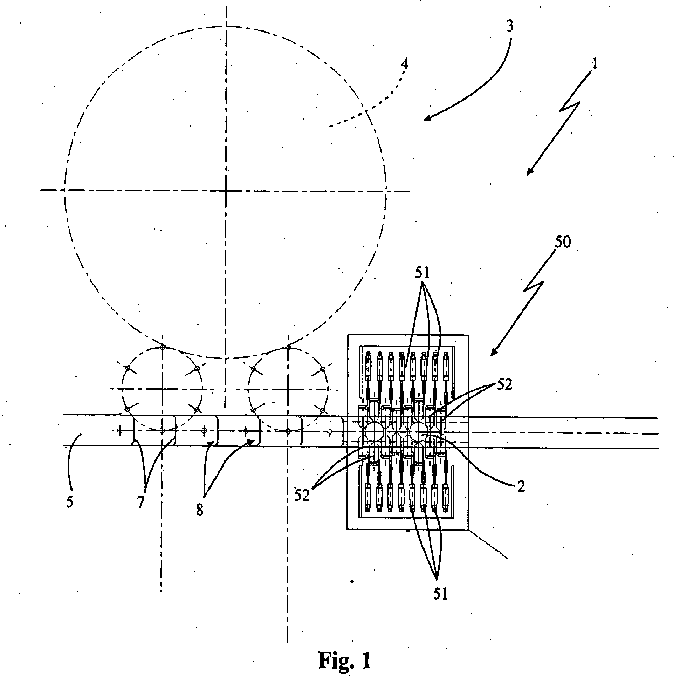

- Fig. 1 shows a schematic plan view of a section of the container transportation line for bottling plants, according to the present invention;

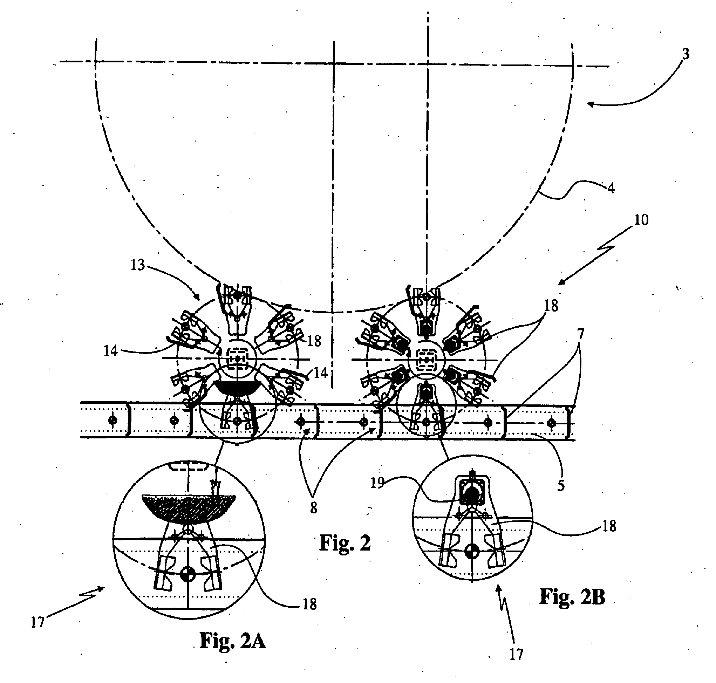

- Fig. 2 shows a schematic plan view of a detail of the line according to Figure 1, relating to means for transferring the containers;
- Figs. 2A and 2B show two schematic views of an enlarged detail of the transfer means according to Figure 2, relating to grippers and to their actuating means;
- Fig. 3 shows a schematic side view of the container transfer means according to Figure 2;
- Fig. 4 shows an enlarged detail of Figure 3, relating to means for adjusting the height of the grippers;
- Fig. 5 shows an enlarged view of a detail of the line 1, relating to the support base of the containers.

### Detailed description of a preferred example of embodiment

With reference to the attached drawings 1 denotes in its entirety the line for transporting containers 2 for bottling plants, according to the present invention.

The transportation line 1 is intended to transport the containers between the different operating machines 3 which usually form an industrial bottling plant, including usually a rinsing machine, in which the containers are washed and sterilized; a filling machine, in which the liquid product is transferred from a storage tank into the container; a corking/capsuling machine, in which the container is sealed hermetically and if necessary along more complete lines also a labeling machine and a packaging machine, together with other ancillary machines.

These machines comprise a rotating carousel 4 around which the containers 2 travel and which has a plurality of operating heads able to perform the various operations on the passing containers, depending on the type of machine involved.

In accordance with the idea forming the basis of the present invention, the line 1 is provided with transportation means comprising a horizontal support surface 5 on which the containers 2 are placed so as to rest with their base. This support surface is bounded laterally by parallel side shoulders 30 which may be moved towards or away from each other automatically depending on the dimensions of the containers 1.

The support surface 5 is mechanically connected at the bottom to a motor-driven first chain 6 which is endlessly wound on pulleys, of which at least one is operated by means of a motor, in particular of the electronically controlled brushless type, it obviously also being possible to use a d.c. or an asynchronous motor. The first chain 6 extends with at least one operating section arranged parallel to the extension of the support surface 5, and at least one return section able to close the loop of the first chain 6.

The first chain 6 has, fixed along it, at regular distances with a constant interval, a plurality of ribs 7 which define a plurality of corresponding first seats 8 on the support surface 5, able to receive the containers 2. In more detail, the ribs 7 extend upwards vertically from the support surface 5, connected with feet to the support base 5 of the first chain 6.

The ribs 7, receiving resting against them the containers, determine in a precise manner the positioning thereof along the first chain 6 for synchronism of the feeding movement of the containers with the various operating machines as described further below.

Following the advancing movement of the first chain 6, the containers 2 are pushed by the ribs so as to move together with the support surface 5 along the entire operating section of the first chain 6.

First adjustment means are provided for varying the absolute position of the ribs 7 in order to maintain always the synchronism with the operating machines of the system upon variation in the size of the containers 2.

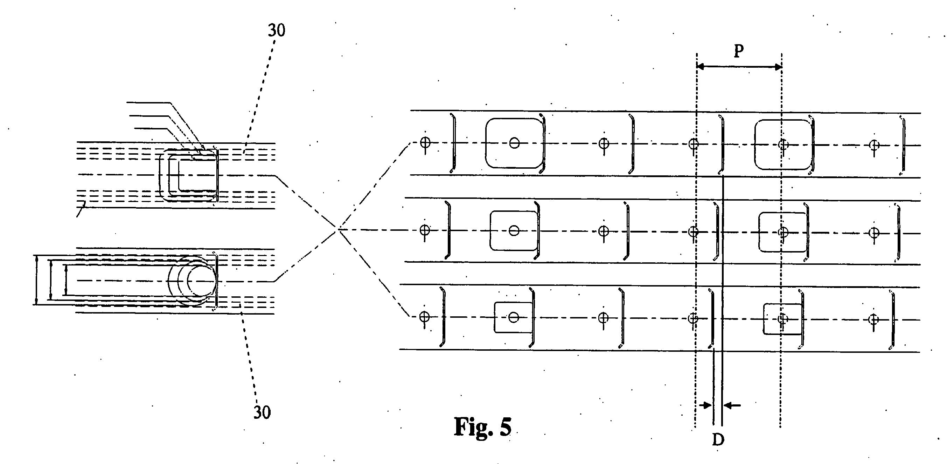

As can be clearly understood from the accompanying Figure 5, it is in fact necessary to vary the position of the ribs 7 when there is a variation in the format of the containers in order to maintain the synchronism with the machines, determined by the interval between the containers.

In accordance with the example according to Figure 5, the ribs spaced by the interval P must be delayed by the distance D when there is an increase in the dimensions of the containers.

Preferably, the first adjustment means are simply obtained by means of the control electronics of the first motor, which allow the movement of all the ribs 7 to be advanced or delayed as a whole, so as to keep them with the same interval in synchronism with the individual operating machines upon variation in the size of the containers 2.

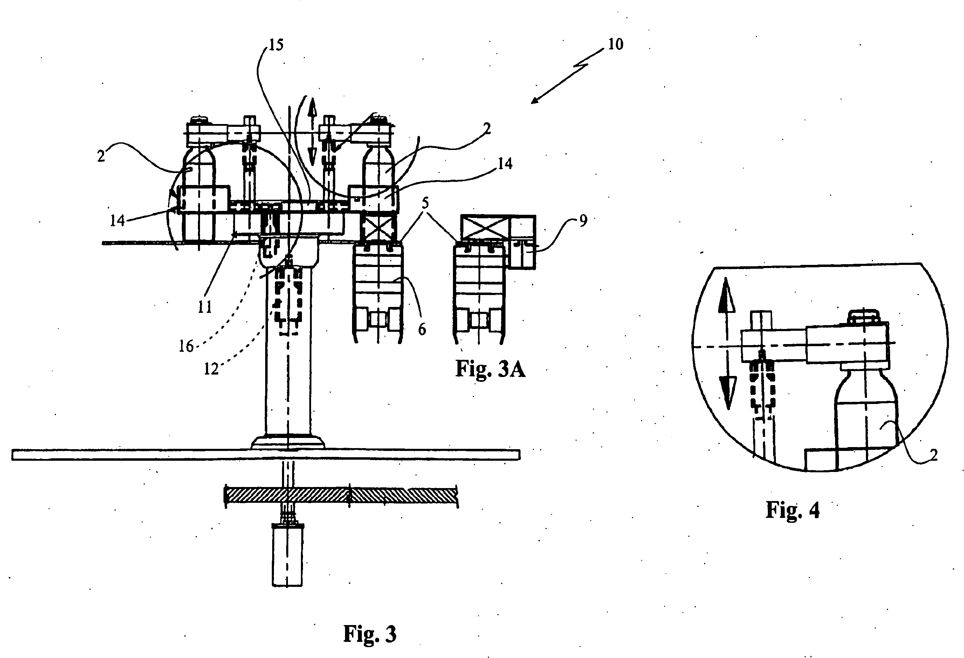

In accordance with a constructional variant of the present invention, indicated in Figure 3A, the ribs 7 may be fixed to a second motor-driven chain 9 which travels along the operating section parallel to the first chain 6 supporting the containers 2 and in a position alongside. The adjustment in this case is obtained by varying the relative position of the two chains 6 and 9, setting the second motor which controls the displacement of this second chain 9 so as to operate with a delay or advance for example.

In accordance with a further constructional variant of the present invention, not shown in detail in the accompanying figures, the support surface 5 may be fixed and the ribs, fixed to a motor-driven chain arranged to one side of the support surface 5, will slidably displace the containers on top of the said surface suitably made of material with a low coefficient of friction.

The adjustment in this case is achieved by adjusting electronically the motor driving the chain which moves the ribs and which therefore determines the position of the containers for synchronization of the components downstream.

The entry of the containers 2 onto the transportation means described above as well as exit thereof in synchronism with the interval of the ribs 7 may be managed by special loading and unloading machines synchronized with the interval of the first chain 6.

Alternatively, the containers 2 may arrive grouped together in a single file on the base 5 of the first chain 6 where, instead of the conventional feed screw for spacing the containers 2 in accordance with the interval of the operating machines, a spacing apparatus 50 will advantageously be provided, being able to modify its configuration so as to adapt to the different formats of the said containers 2.

In greater detail, this apparatus 50 comprises on the two sides of the first chain 6 above the support surface 5 a plurality of actuators 51 arranged alongside each other and able to be operated so as to push the containers 2 in the direction of forward movement of the first chain 6.

The ends of the actuators 51 have, fixed thereto, suitably shaped stems 52 which define a receiving seat for the containers, which, as a result of synchronized operation of the actuators, is displaced with respect to the support base 5 until the individual containers 2 are spaced in accordance with the interval defined by the ribs 11 and in synchronism with the latter.

Obviously control of the actuators 51 is performed by the same logic control unit of the line.

Each operating machine 3 is moreover provided with transfer means 10 able to pick up the containers 2 from the support surface 5 and subject them to the programmed operations by the heads of the operating machine concerned.

These transfer means 10 comprise, with particular reference to Figure 3, a first starwheel 11 which is made to rotate in synchronism with the carousel carrying the working heads of the operating machine 3 by a central shaft operated by a third motor 12 arranged preferably coaxially inside a support column of the first starwheel 11. Alternatively, in accordance with a different example of embodiment in the same Figure 3, the first starwheel 11 may be rotationally driven by the same rotating carousel 4 by means of transmission means consisting, for example, of simple gearwheels which are mechanically active on the central shaft.

The first starwheel 11 has recesses defining a plurality of second seats 13 bounded, at least partially, by flanges 14 intended to receive the containers 2 resting against them.

The synchronism between the first starwheel 11 which rotates and the feeding movement of the containers 2 on the support surface 5 which allows the containers to pass from the first seats 8 into the second seats 13 is ensured by the first adjustment means.

Second adjustment means are also provided for varying the angular position of the flanges 14 on the first starwheel 11. These means are preferably formed by a second starwheel comprising a disk-shaped part 15 with the flanges 14 fixed radially thereon. The disk-shaped part 15 is rigidly connected to the central shaft of the first starwheel 11 and its relative position with respect to the latter is adjusted precisely by an actuator or fourth motor 16 which therefore has the function of varying the position of the flanges 14 on the first starwheel 11 upon variation in the containers format in order to keep them in synchronism with the heads of the rotating carousel 4.

In greater detail, the actuator or fourth motor 16 causes a controlled relative rotation of the disk-shaped part 15 which carries the radially fixed flanges with respect to the first starwheel 11 and the drive shaft.

The motor 16 may advantageously be a brushless motor or a stepper motor or a motor with inverter or other motor able to modify the position of the container when there is a variation in their format so as to reestablish the synchronism with the heads of the operating machine 3 which are mounted on the rotating carousel 4.

The transfer means moreover comprise gripping means 17 for picking up the containers 3 from the second seats 13 and subjecting them to the action of the heads of the operating machine 3.

These gripping means are provided with a plurality of grippers 18 which, in number, are equal to the number of second seats 13 and a submultiple of the number of operating heads of the machine 3. The grippers 18 are fixed to the first starwheel 11 by means of uprights and are angularly spaced in accordance with the interval of the second seats 13. The grippers 18 are kept operationally in synchronism with the heads arranged on the rotating carousel 4 of the machine 3 when there is a variation in the form of the containers 2 owing to adjustment of the position of the flanges 14 by means of the second adjustment means.

Third adjustment means are also provided for varying the gripping position of the grippers 18 on the neck of the containers 2 and fourth adjustment means are provided for varying the degree of opening of the grippers 18 depending on the width of the neck of the containers.

The third adjustment means are obtained with an electronically controlled linear actuator able to move vertically the framework supporting the grippers 18 or the first starwheel 11.

Alternatively, as indicated in Figure 3, the third adjustment means may envisage the use of a linear actuator on each support upright of the gripper 18 which is also controlled electronically in order to vary the height of the grip depending on the format of the container 2.

The fourth adjustment means may be obtained by means of a stepper motor 19 able to move an eccentric pin able to interfere with the levers of the grippers 18 which are pivotably hinged together and consequently open them in a controlled manner. Resiliently yielding means are provided for the closing return movement of the grippers 18.

Opening of the grippers 18 may alternatively be performed by the action of a cam which is fixed with respect to the grippers transported by the first starwheel 11 and the position of which can be adjusted radially so as to vary opening of the levers of the said grippers 18.

The transportation line 1 according to the present invention is able to maintain the synchronism between all the machines required with a variation in the format of the containers 2.

This result is made possible by the transportation means, the transfer means and the various adjusting means described above, which are all controlled and managed by a logic control unit, which ensures correct interfacing between the individual machines and between the latter and the transportation and transfer means.

In accordance with the present invention, the operating machines such as the rinsing machine, bottling machine, etc., may be of the conventional rotating carousel type, which are modified only with regard to incorporation therein of the novel starwheel and the associated gripping means.

The operating principles of the operating machines already known, such as the filling, washing or corking procedures, as well as the sequence of operating steps, may remain substantially unvaried.

Overall, therefore, the novel line will have a layout which is similar to that of the present compact lines and will consist of the various operating machines connected together by means of the novel transportation line, so as to create a single integrated process, starting with handling of the empty container and ending with final packaging.

Operationally speaking, depending on the type of format of the container used, the operator will retrieve from the memory of the logic control unit the corresponding working sequence and, on the basis of the data stored in it, the control unit will operate the first adjustment means for arrangement of the bottles, so as to vary the position assumed by the transportation means, and adjust the second, third and if necessary fourth adjustment means for the transfer means, so as to vary the position of the bottles in the starwheels and also modify the operating characteristics of the grippers (gripping position and degree of opening of the grippers). The control unit will also adjust, in accordance with predefined operating steps determined by the format of the containers, the actuators 51 of the spacing apparatus 50 so as to introduce them onto the support surface of the transportation means in synchronism with the ribs. Finally, the control unit will perform, in accordance with the sequence of the format of the selected container, adjustment of the working parameters of each machine as regards, for example, the position of the filling nozzle, the washing and filling times, etc. It is pointed out that these latter adjustments already exist on the present machines, but the possibility of adjustment is limited to the operating parameters, while, as specified previously, the setting of the other devices described for the change of format of the container must be performed manually.

The control unit, in terms of its hardware and software as a whole, will coordinate, thanks to the means specified · above, the implementation of all the adjustments, which are related to each other, ensuring adjustment of all the devices for the changing the format of the containers.

The invention thus conceived therefore achieves the predefined objects.

Obviously it may assume, in its practical embodiment, also forms and configurations which are different from that described above as far as they are within the invention as defined by claim 1. Moreover, all the details may be replaced by technically equivalent elements and the forms, dimensions and the materials used may be according to requirements.

## Claims

1. Container transportation line for bottling plants of the type provided with several operating machines (3) of the rotating carousel type (4), each carrying peripherally a plurality of operating heads, including in particular a rinsing machine, a filling machine and a corking/capsuling machine, said container transporting line comprising:
- transportation means comprising:
· a support surface (5) for receiving said containers (2) resting thereon;
· an endlessly wound motor-driven first chain (6), with at least one operating section associated with said support surface (5), having connected thereto, a plurality of ribs (7) with a constant interval (9) delimiting a plurality of first seats (8) for said containers (2), able to move said containers (2) arranged on said support surface (5) following the advancing movement of said first chain (6);
· first adjustment means able to vary the position of said ribs (7) with respect to their absolute position depending on the dimensions of the containers (2);
- means for performing transfer (10) from said transportation means to at least one operating machine comprising:
· at least one rotating first starwheel (11) associated with said operating machine (3) and provided with a plurality of second seats (13) formed in the recesses of the first starwheel (11) and intended to receive in synchronism the containers (2) from said first seats (8), resting on flanges (14) associated with the second seats (13), the adjustment of the position of said ribs (7) by means of said first adjustment means determining the synchronism between said transportation means and said transfer means upon variation in the form of the containers (2); second adjustment means able to vary the angular position of said flanges (14) with respect to said first starwheel (11).

2. Transportation line according to Claim 1, **characterized in that** said transfer means also comprise means for gripping said containers (2), able to displace the latter from said second seats (13) to the working heads of said operating machines (3) and provided with a plurality of grippers (18) which are angularly spaced at the angular interval of said second seats (13), and in synchronism with said heads upon variation in the form of the containers (2) following adjustment of the position of said flanges (14) by means of said second adjustment means.

3. Transportation line according to Claim 1, **characterized in that** the second seats (13) of said first starwheel (11) are, in number, a submultiple of the number of operating heads of said machine (3).

4. Transportation line according to Claim 2, **characterized in that** said transfer means comprise third adjustment means for varying the gripping height of said grippers (18) on the neck of said containers (2).

5. Transportation line according to Claim 2, **characterized in that** said transfer means comprise four adjustment means for varying opening of said grippers (18) depending on the width of the neck of said containers (2).

6. Transportation line according to Claim 1, **characterized in that** said ribs (7) are fixed to said first chain (6).

7. Transportation line according to Claim 1, **characterized in that** said first adjustment means are achieved by means of control of the first motor driving said first chain (6).

8. Transportation line according to Claim 1, **characterized in that** said first transportation means comprise a second chain (9) having said ribs (7) fixed thereon and being moved by a second motor along an operating section parallel to said first chain (6) and at the same speed as the latter.

9. Transportation line according to Claim 8, **characterized in that** said first adjustment means are achieved by means of control of the second motor driving said second chain (9).

10. Transportation line according to Claim 1, **characterized in that** said second chain moves said containers (2) on said fixed support surface (5) by means of said ribs (7) for said operating section.

11. Transportation line according to Claim 7 or 9, **characterized in that** said first or second electric motor is of the brushless type, stepper type or controlled by an inverter.

12. Transportation line according to Claim 1, **characterized in that** said second adjustment means comprise a second starwheel or a frame with said flanges (14) fixed radially, able to be displaced by means of a third motor which is electronically controlled with respect to said first starwheel 11.

13. Transportation line according to Claim 12, **characterized in that** said third motor is of the brushless type, stepper type or controlled by an inverter.

14. Transportation line according to Claim 4, **characterized in that** said third adjustment means comprise at least one linear actuator (51) able to move at least one said gripper to different heights depending on the form of said containers (2).

15. Transportation line according to Claim 5, **characterized in that** said fourth adjustment means comprise stepper motors, each able to control in a controlled manner opening of the levers of each gripper which are pivotably hinged together and subject to a resilient recall force.

16. Transportation line according to Claim 5, **characterized in that** said fourth adjustment means comprise at least one cam which is fixed with respect to the first starwheel (11), displaceable radially and able to interfere with the levers of each gripper pivotably hinged together and subject to a resilient recall force for causing opening and closing thereof.

17. Transportation line according to Claim 1, **characterized in that** it comprises a spacing apparatus (50) arranged so as to intercept said transportation means and provided with a plurality of actuators (51) arranged alongside each other and able to be operated in predefined operating steps so as to push the containers (2) in the direction of forward movement of the first chain (6), spacing them in accordance with the interval of the ribs (7) and in synchronism with the latter upon variation in the size of the containers (2).

## Patentansprüche

1. Behältertransportband für Abfüllanlagen, die mehrere insbesondere eine Spülmaschine, eine Füllmaschine und eine Verkorkungs-/Verkapselungsmaschine umfassende Arbeitsmaschinen (3) vom Typ eines rotierenden Karussells (4), von denen jedes auf seinem Umfang eine Vielzahl von Arbeitsköpfen trägt, aufweisen, wobei das Behältertransportband umfasst:
- Transportmittel, umfassend:
• eine Auflagefläche (5) zum Aufnehmen der Behälter (2), die darauf ruhen;
• eine endlos gewickelte motorisch angetriebene erste Kette (6) mit mindestens einem mit der Auflagefläche (5) verbundenen Arbeitsbereich, an die eine Vielzahl von eine Vielzahl von ersten Aufnahmen (8) für die Behälter (2) begrenzenden Rippen (7) mit einem konstanten Abstand (9) angeschlossen ist, die in der Lage sind, die auf der Auflagefläche (5) angeordneten Behälter (2) zu bewegen, die der Vorschubbewegung der ersten Kette (6) folgen;
• erste Einstellmittel, die in der Lage sind, die Position der Rippen (7) in Bezug auf ihre absolute Position in Abhängigkeit von den Abmessungen des Behälters (2) zu verändern;
- Mittel zum Ausführen der Übergabe (10) von den Transportmitteln an mindestens eine Arbeitsmaschine, umfassend:
• mindestens ein rotierendes Sternrad (11), das mit der Arbeitsmaschine (3) verbunden und mit einer Vielzahl von zweiten Aufnahmen (13) versehen ist, die in den Aussparungen des ersten Sternrads (11) ausgebildet und dazu bestimmt sind, die Behälter (2), die auf mit den zweiten Aufnahmen (13) verbundenen Flanschen (14) aufliegen, im Gleichlauf von den ersten Aufnahmen (8) zu empfangen, wobei die Einstellung der Position der Rippen (7) mit Hilfe der ersten Einstellmittel den Gleichlauf zwischen den Transportmitteln und den Übergabemitteln bei einer Veränderung der Form der Behälter (2) bestimmt;
• zweite Einstellmittel, die in der Lage sind, die Winkelposition der Flansche (14) in Bezug auf das erste Sternrad (11) zu verändern.

2. Transportband nach Anspruch 1, **dadurch gekennzeichnet, dass** die Übergabemittel außerdem Mittel zum Greifen der Behälter (2) umfassen, die in der Lage sind, letztere von den zweiten Aufnahmen (13) zu den Arbeitsköpfen der Arbeitsmaschinen (3) zu versetzen, und eine Vielzahl von Greifern (18) aufweisen, die mit dem Winkelabstand der zweiten Aufnahmen (13) winklig beabstandet sind, und dass im Gleichlauf mit den Köpfen bei Änderung der Form der Behälter (2) die Einstellung der Position der Flansche (14) mit Hilfe der zweiten Einstellmittel erfolgt.

3. Transportband nach Anspruch 1, **dadurch gekennzeichnet, dass** die Anzahl der zweiten Aufnahmen (13) des ersten Sternrads (11) ein Teiler der Anzahl von Arbeitsköpfen der Maschine (3) ist.

4. Transportband nach Anspruch 2, **dadurch gekennzeichnet, dass** die Übergabemittel dritte Einstellmittel zum Verändern der Greifhöhe der Greifer (18) am Hals der Behälter (2) umfassen.

5. Transportband nach Anspruch 2, **dadurch gekennzeichnet, dass** die Übergabemittel vier Einstellmittel zum Verändern der Öffnung der Greifer (18) in Abhängigkeit von der Breite des Halses der Behälter (2) umfassen.

6. Transportband nach Anspruch 1, **dadurch gekennzeichnet, dass** die Rippen (7) an der ersten Kette (6) befestigt sind.

7. Transportband nach Anspruch 1, **dadurch gekennzeichnet, dass** die ersten Einstellmittel über eine Steuerung des die erste Kette (6) antreibenden ersten Motors realisiert werden.

8. Transportband nach Anspruch 1, **dadurch gekennzeichnet, dass** die ersten Transportmittel eine zweite Kette (9) umfassen, welche die darauf befestigten Rippen (7) aufweist und durch einen zweiten Motor längs eines zur ersten Kette (6) parallelen Arbeitsbereichs und mit derselben Geschwindigkeit wie letztere bewegt wird.

9. Transportband nach Anspruch 8, **dadurch gekennzeichnet, dass** die ersten Einstellmittel über eine Steuerung des die zweite Kette (9) antreibenden zweiten Motors realisiert werden.

10. Transportband nach Anspruch 1, **dadurch gekennzeichnet, dass** die zweite Kette die Behälter (2) auf der unbeweglichen Auflagefläche (5) mit Hilfe der Rippen (7) für den Arbeitsbereich bewegt.

11. Transportband nach Anspruch 7 oder 9, **dadurch gekennzeichnet, dass** der erste oder zweite Elektromotor des bürstenlosen Typs oder des Schrittmotortyps ist oder von einem Frequenzumrichter gesteuert wird.

12. Transportband nach Anspruch 1, **dadurch gekennzeichnet, dass** die zweiten Einstellmittel ein zweites Sternrad oder ein Gestell, an dem die Flansche (14) radial befestigt sind, umfasst, das mit Hilfe eines dritten Motors, der elektronisch gesteuert wird, in Bezug auf das erste Sternrad (11) versetzt werden kann.

13. Transportband nach Anspruch 12, **dadurch gekennzeichnet, dass** der dritte Motor des bürstenlosen Typs oder des Schrittmotortyps ist oder von einem Frequenzumrichter gesteuert wird.

14. Transportband nach Anspruch 4, **dadurch gekennzeichnet, dass** die dritten Einstellmittel mindestens einen Linearaktuator (51) umfassen, der in der Lage ist, mindestens einen Greifer in Abhängigkeit von der Form der Behälter (2) auf verschiedene Höhen zu bewegen.

15. Transportband nach Anspruch 5, **dadurch gekennzeichnet, dass** die vierten Einstellmittel Schrittmotoren umfassen, die jeweils in der Lage sind, in kontrollierter Weise die Öffnung der Hebel jedes Greifers zu steuern, die drehbar aneinander angelenkt sind und einer elastischen Rückstellkraft unterliegen.

16. Transportband nach Anspruch 5, **dadurch gekennzeichnet, dass** die vierten Einstellmittel mindestens einen Nocken umfassen, der in Bezug auf das erste Sternrad (11) ortsfest ist, radial versetzt werden kann und in der Lage ist, in die drehbar aneinander angelenkten und einer elastischen Rückstellkraft unterliegenden Hebel jedes Greifers einzugreifen, um das Öffnen und Schließen desselben zu bewirken.

17. Transportband nach Anspruch 1, **dadurch gekennzeichnet, dass** es eine Beabstandungsvorrichtung (50) umfasst, die so angeordnet ist, dass sie die Transportmittel unterbricht, und eine Vielzahl von Aktuatoren (51) aufweist, die nebeneinander angeordnet sind und in vorbestimmten Arbeitsschritten derart betätigt werden können, dass sie die Behälter (2) in der Richtung der Vorwärtsbewegung der ersten Kette (6) schieben, wobei sie diese in Übereinstimmung mit dem Abstand der Rippen (7) und im Gleichlauf mit letzteren bei einer Änderung der Größe der Behälter (2) beabstanden.

## Revendications

1. Ligne de transport de récipients pour installations d'embouteillage du type muni de plusieurs machines fonctionnelles (3) du type à carrousel rotatif (4), chacune supportant en périphérie une pluralité de têtes fonctionnelles, comprenant en particulier une machine de rinçage, une machine de remplissage et une machine de bouchage/capsulage, ladite ligne de transport de récipients comprenant :
- des moyens de transport comprenant :
. une surface de support (5) pour recevoir lesdits récipients (2) posés sur celle-ci ;
. une première chaîne (6) enroulée sans fin entraînée par moteur, avec au moins une section fonctionnelle associée à ladite surface de support (5), comportant une pluralité de nervures (7), reliées à celle-ci, avec un intervalle constant (9) délimitant une pluralité de premiers sièges (8) pour lesdits récipients (2), adaptées pour déplacer lesdits récipients (2) disposés sur ladite surface de support (5) suivant le mouvement d'avancement de ladite première chaîne (6) ;
. des premiers moyens de réglage adaptés pour faire varier la position desdites nervures (7) par rapport à leur position absolue en fonction des dimensions des récipients (2) ;
- des moyens pour effectuer le transfert (10) desdits moyens de transport à l'au moins une machine fonctionnelles, comprenant :
. au moins une première roue en étoile rotative (11) associée à ladite machine fonctionnelle (3) et munie d'une pluralité de deuxièmes sièges (13) formés dans les cavités de la première roue en étoile (11) et destinés à recevoir en synchronisme les récipients (2) provenant desdits premiers sièges (8), reposant sur des brides (14) associées aux deuxièmes sièges (13), le réglage de la position desdites nervures (7) par l'intermédiaire desdits premiers moyens de réglage déterminant le synchronisme entre lesdits moyens de transport et lesdits moyens de transfert lors de la variation de la forme des récipients (2) ;
. des deuxièmes moyens de réglage adaptés pour faire varier la position angulaire desdites brides (14) par rapport à ladite première roue en étoile (11).

2. Ligne de transport selon la revendication 1, **caractérisée en ce que** lesdits moyens de transfert comprennent des moyens pour saisir lesdits récipients (2), adaptés pour déplacer ces derniers desdits deuxièmes sièges (13) aux têtes de travail desdites machines fonctionnelles (3) et sont munis d'une pluralité pinces de préhension (18) qui sont espacées angulairement à l'intervalle angulaire desdits deuxièmes sièges (13), et en synchronisme avec lesdites têtes lors de la variation de la forme des récipients (2) suivant le réglage de la position desdites brides (14) au moyen desdits deuxièmes moyens de réglage.

3. Ligne de transport selon la revendication 1, **caractérisée en ce que** les deuxièmes sièges (13) de ladite première roue en étoile (11) sont, en nombre, un sous-multiple du nombre de têtes fonctionnelles de ladite machine (3).

4. Ligne de transport selon la revendication 2, **caractérisée en ce que** lesdits moyens de transfert comprennent des troisièmes moyens de réglage pour faire varier la hauteur de préhension desdites pinces de préhension (18) sur le goulot desdits récipients (2).

5. Ligne de transport selon la revendication 2, **caractérisée en ce que** lesdits moyens de transfert comprennent des quatrièmes moyens de réglage pour faire varier l'ouverture desdites pinces de préhension (18) en fonction de la largeur du goulot desdits récipients (2).

6. Ligne de transport selon la revendication 1, **caractérisée en ce que** lesdites nervures (7) sont fixées à ladite première chaîne (6).

7. Ligne de transport selon la revendication 1, **caractérisée en ce que** lesdits premiers moyens de réglage sont réalisés par la commande du premier entraînement par moteur de ladite première chaîne (6).

8. Ligne de transport selon la revendication 1, **caractérisée en ce que** lesdits premiers moyens de transport comprennent une deuxième chaîne (9) avec lesdites nervures (7) fixées dessus et entraînée par un deuxième moteur le long d'une section fonctionnelle parallèle à ladite première chaîne (6) et à la même vitesse que celle-ci.

9. Ligne de transport selon la revendication 8, **caractérisée en ce que** les premiers moyens de réglage sont réalisés par la commande du deuxième entraînement par moteur de ladite deuxième chaîne (9).

10. Ligne de transport selon la revendication 1, **caractérisée en ce que** ladite deuxième chaîne déplace lesdits récipients (2) sur ladite surface de support fixe (5) au moyen desdites nervures (7) pour ladite section fonctionnelle.

11. Ligne de transport selon la revendication 7 ou 9, **caractérisée en ce que** ledit premier ou deuxième moteur électrique est du type sans balais, du type pas à pas ou commandé par un convertisseur.

12. Ligne de transport selon la revendication 1, **caractérisée en ce que** lesdits deuxièmes moyens de réglage comprennent une deuxième roue en étoile ou un châssis avec lesdites brides (14) fixées radialement, adapté pour être déplacé au moyen d'un troisième moteur qui est commandé électroniquement par rapport à ladite première roue en étoile (11).

13. Ligne de transport selon la revendication 12, **caractérisée en ce que** ledit troisième moteur électrique est du type sans balais, du type pas à pas ou commandé par un convertisseur.

14. Ligne de transport selon la revendication 4, **caractérisée en ce que** lesdits troisièmes moyens de réglage comprennent au moins un actuateur linéaire (51) adapté pour déplacer au moins une pince de préhension à différentes hauteurs en fonction de la forme desdits récipients (2).

15. Ligne de transport selon la revendication 5, **caractérisée en ce que** lesdits quatrièmes moyens de réglage comprennent des moteurs pas à pas, chacun adapté pour commander d'une manière contrôlée l'ouverture des leviers de chaque pince de préhension qui sont articulés entre eux de manière pivotante et soumis à une force de rappel élastique.

16. Ligne de transport selon la revendication 5, **caractérisée en ce que** lesdits quatrièmes moyens de réglage comprennent au moins une came qui est fixée par rapport à la première roue en étoile (11), déplaçable radialement et adaptée pour interférer avec les leviers de chaque pince de préhension articulés entre eux de manière pivotante et soumis à une force de rappel élastique pour provoquer leur ouverture et leur fermeture.

17. Ligne de transport selon la revendication 1, **caractérisée en ce qu'**elle comprend un dispositif d'espacement (50) agencé de manière à intercepter lesdits moyens de transport et muni d'une pluralité d'actuateurs (51) agencés côte à côte et adaptés pour être actionnés dans des étapes fonctionnelles prédéfinies de manière à pousser les récipients (2) dans la direction du mouvement avant de ladite première chaîne (6), en les espaçant en fonction de l'intervalle des nervures (7) et en synchronisme avec celles-ci lors de la variation de la dimension des récipients (2).
